Europäisches Patentamt

European Patent Office

Office européen des brevets

(19)

(11) Veröffentlichungsnummer: **0 017 055**
A2

(12) **EUROPÄISCHE PATENTANMELDUNG**

(21) Anmeldenummer: **80101347.5**

(22) Anmeldetag: **14.03.80**

(51) Int. Cl.³: **B 67 B 3/00**
**B 08 B 3/02**

(30) Priorität: **04.04.79 DE 2913447**

(43) Veröffentlichungstag der Anmeldung:
**15.10.80 Patentblatt 80/21**

(84) Benannte Vertragsstaaten:
**AT BE CH FR GB IT LU NL SE**

(71) Anmelder: **Alcoa Deutschland GmbH Maschinenbau**
**Robert-Bosch-Strasse 6**
**D-6806 Viernheim / Hessen(DE)**

(72) Erfinder: **Massot, Philipp**
**Bahnhofstrasse 570**
**D-6903 Neckargemünd(DE)**

(74) Vertreter: **Ratzel, Gerhard, Dr.**
**Seckenheimer Strasse 36a**
**D-6800 Mannheim 1(DE)**

(54) **Vorrichtung zum Reinigen und Warten der Arbeitsköpfe eines Flaschenbehandlungsrundläufers.**

(57) Die Erfindung betrifft eine Vorrichtung zum Reinigen und Warten der Arbeitsköpfe eines Flaschenbehandlungsrundläufers. Erfindungsgemäß ist dazu parallel zur Rundläufer-Maschine ein Arm (7) auf einem Rahmen (8) angeordnet, wobei der Arm (7) einen Düsenkopf (2) gegenüber den Arbeitsköpfen (1) trägt. Aus dem Düsenkopf (2) können durch die vom Wasserventil (9) gesteuerte Wasserzufuhr (4) Wasser, durch die von dem Luftventil (11) gesteuerte Luftzufuhr (5) Preßluft, aus dem vom Reinigungsventil (12) gesteuerten Reinigungsbehälter (10) Reiniger und aus dem vom Ölventil (13) gesteuerten Ölbehälter (14) Öl auf die Arbeitsköpfe (1) des Rundläufers gesprüht werden. Der Sprühvorgang kann von einer elektronischen Steuerung (6) geschaltet werden.

EP 0 017 055 A2

./...

<u>Vorrichtung zum Reinigen und Warten der Arbeitsköpfe
eines Flaschenbehandlungsrundläufers.</u>

Die Erfindung betrifft eine Vorrichtung zum Reinigen
und Warten der Arbeitsköpfe eines Flaschenbehandlungsrundläufers.

Zweck dieser Vorrichtung ist es, die vollautomatische Reinigung und Wartung einschließlich der Schmierung der
Arbeitsköpfe von Rundläufern, insbesondere zum Verschließen von Flaschen, Dosen und dergleichen während
der Betriebspause oder nach Arbeitsende zu übernehmen.
Die ständige Reinigung der Arbeitsköpfe ist sowohl aus
arbeitshygienischen Gründen geboten als auch dadurch,
daß ungeschmierte Arbeitsköpfe rasch verschleißen.

In der Praxis wurde die Reinigung und Wartung der Arbeitsköpfe bislang dem Bedienungspersonal der Flaschenbehandlungsmaschinen überlassen. Das Bedienungspersonal
übernahm dabei die einzelnen Reinigungs- und Wartungsaufgaben manuell.

Wesentliche Nachteile der manuellen Reinigung und Wartung
der Arbeitsköpfe bestehen darin, daß die Arbeiten mit
schwankender Qualität durchgeführt werden und in der
Regel Überstunden erforderlich machen; denn bislang war

- 2 -

es nur während der Betriebspausen, insbesondere nach Feierabend möglich, an den stillstehenden Rundläufern die Reinigungs- und Wartungsarbeiten auszuführen. Dies verursachte nicht nur hohe Kosten, sondern auch eine Verschleißrate der Arbeitsköpfe, die über derjenigen liegt von vergleichbaren mechanischen Vorrichtungen in anderen Industriezweigen.

Der Erfindung liegt die Aufgabe zugrunde, die Reinigung und Wartung der Arbeitsköpfe automatisch durchzuführen undzwar unabhängig von den Betriebspausen. Dadurch soll die Reinigung und Wartung erheblich billiger und zuverlässiger durchgeführt werden. Die daraus resultierende erhöhte Lebensdauer der Arbeitsköpfe kommt dann noch als weiterer, kostensenkender Faktor hinzu.

Die Aufgabe wird erfindungsgemäß dadurch gelöst, daß an einem Arm, der parallel zur Rundläufer-Maschine angeordnet ist, ein Rahmen befestigt wird, auf dem Installationen befestigt sind, die alle notwendigen Reinigungs- und Wartungsaufgaben übernehmen können. Dazu ist auf dem Rahmen, insbesondere ein Düsenkopf gegenüber den Arbeitsköpfen auf dem Rundläufer angeordnet, aus dem die verschiedenen Reinigungs- und Wartungsmedien auf die Arbeitsköpfe aufgesprüht werden können.

Der Düsenkopf kann mit Preßluft, Wasser, Reiniger und Öl beaufschlagt werden. Dazu befinden sich auf dem Rahmen ein Reinigungsbehälter mit einem Vorrat an Reinigern und ein Ölbehälter mit einem Ölvorrat. Die Wasserzufuhr und die Luftzufuhr aus dem Rahmen werden ebenso wie die Stromzufuhr von außen her versorgt. Außerdem ist noch eine elektronische Steuerung auf dem Rahmen angeordnet, die ein komplettes Reinigungs- bzw. Wartungsprogramm ablaufen lassen kann.

Die erfindungsgemäße Reinigung und Wartung der Arbeitsköpfe wird dadurch vollzogen, daß durch den Düsenkopf Wasser, Reiniger, Preßluft und Öl in willkürlicher Reihenfolge und / oder Mischung auf die Arbeitsköpfe gesprüht wird. Dies kann auch während des normalen Betriebes des Rundläufers geschehen. Jedoch läßt sich die elektronische Steuerung auch so einstellen, daß der Rundläufer vollautomatisch während einer Betriebspause oder nach Arbeitsende von der erfindungsgemäßen Vorrichtung gereinigt wird. Die Zuleitungen der einzelnen Reinigungsmedien können von verschiedenen Magnetventilen über die elektronische Steuerung verschlossen und geöffnet werden. Diese Magnetventile können auch als Regelventile ausgelegt werden. So besitzt die Wasserzufuhr ein Wasserventil, die Luftzufuhr ein Luftventil, der Reinigungsbehälter ein Reinigungsventil und der Ölbehäl-

- 4 -

ter ein Ölventil. Vorzugsweise wird als erstes Wasser auf die Arbeitsköpfe gesprüht, um so den gröbsten Schmutz von den Arbeitsköpfen abzuspülen. Danach wird ein Wasser-Reiniger-Gemisch aufgesprüht, welches die Feinreinigung und gegebenenfalls die Desinfizierung übernimmt. Danach wird zur Trocknung der Arbeitsköpfe reine Preßluft auf die Arbeitsköpfe geblasen. Schließlich wird zur Wartung ein Preßluft-Ölgemisch auf die Arbeitsköpfe aufgetragen; die Oberflächenspannung des Öles sorgt dafür, daß sich das Öl von selbst in gewünschter Weise auf und in dem Arbeitskopf verteilt. Dieses bevorzugte Reinigungs- und Wartungsprogramm kann durch die elektronische Steuerung sowohl von Hand geschaltet werden als auch vollautomatisch betrieben werden. Der Schalter für die elektronische Steuerung befindet sich vorzugsweise an dem Arm bzw. Rahmen der erfindungsgemäßen Vorrichtung, um versehentliches Ausschalten durch eine Arbeitskraft möglichst zu verhindern.

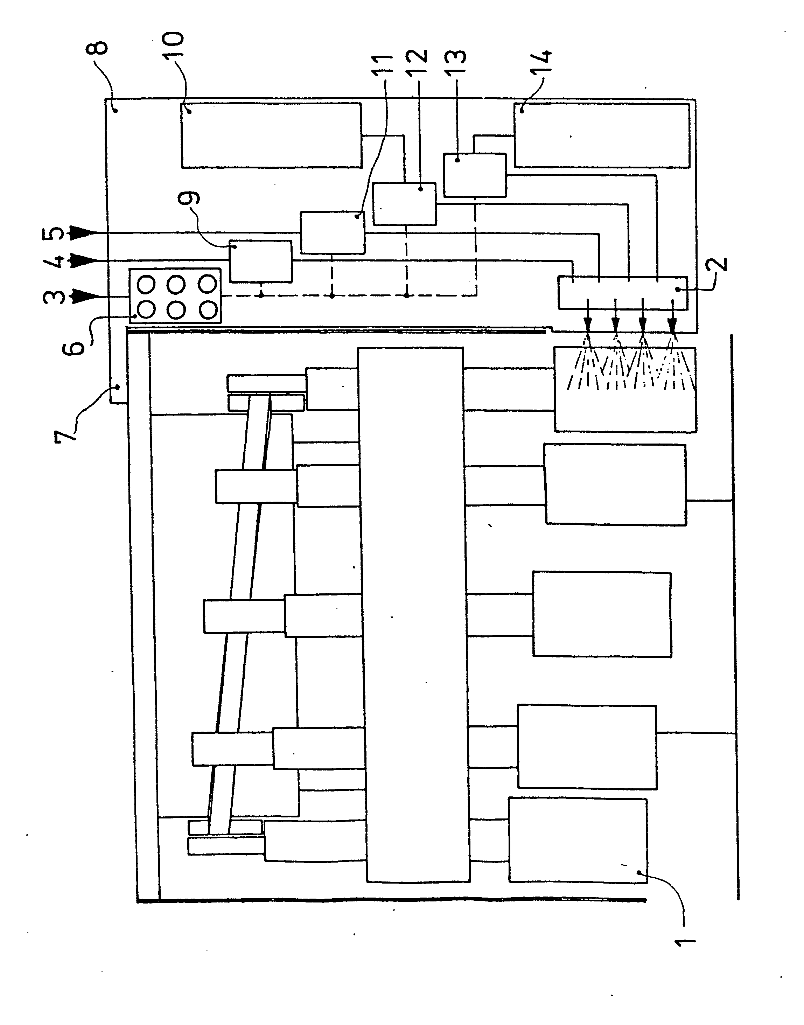

Ein Ausführungsbeispiel der Erfindung ist in der Figur dargestellt und wird im folgenden näher beschrieben:

In der Mitte der Figur ist schematisch ein Rundläufer dargestellt. Am unteren Teil des Rundläufers sind die Arbeitsköpfe ( 1 ) angebracht. Bei dem abgebildeten

- 5 -

Rundläufer heben und senken sich die Arbeitsköpfe ( 1 ) bei einer Umdrehung jeweils einmal; dieser Bewegungsablauf ist für Flaschenbehandlungsrundläufer typisch. Oberhalb des Rundläufers ist ein Arm ( 7 ) befestigt, an dem der Rahmen ( 8 ) der erfindungsgemäßen Vorrichtung angebracht ist. Unten an dem Rahmen ( 8 ) ist der Düsenkopf ( 2 ) gegenüber den Arbeitsköpfen ( 1 ) angeordnet; aus diesem Düsenkopf ( 2 ) können die verschiedenen Reinigungs- bzw. Wartungsmedien auf die Arbeitsköpfe gesprüht werden. Der Düsenkopf ( 2 ) wird über das Wasserventil ( 9 ) von der Wasserzufuhr ( 4) mit Wasser über das Luftventil ( 11 ) von der Luftzufuhr ( 5 ) mit Luft, über das Reinigungsventil ( 12 ) von dem Reinigungsbehälter ( 1o ) mit Reiniger und über das Ölventil ( 13 ) von dem Ölbehälter ( 14 ) mit Öl beaufschlagt. Als Reiniger läßt sich jedes in der Branche bekannte, flüssige Reinigungsmittel einsetzen. Das Wasserventil ( 9 ), das Luftventil ( 11 ), das Reinigungsventil ( 12 ) und das Ölventil ( 13 ) sind vorzugsweise als Magnetventile oder magnetische Regelventile ausgeführt. Diese Ventile werden von der elektronischen Steuerung ( 6 ) gelenkt. Die elektronische Steuerung ( 6 ) wird von außen her über die Stromzufuhr ( 3 ) mit elektrischer Energie versorgt. Angedeutet sind an der elektronischen Steuerung ( 6 ) durch Kreise, Schalter und Anzeigeinstrumente des Steuerungsteiles.

Die mit der erfindungsgemäßen Vorrichtung erzielten Vorteile bestehen darin, daß nunmehr die Reinigung und Wartung der Arbeitsköpfe eines Flaschenbehandlungsrundläufers vollautomatisch und gegebenenfalls auch während des Betriebes durchgeführt werden können. Dadurch werden Arbeitskräfte und Betriebspausen eingespart. Darüberhinaus wird die Lebensdauer der Arbeitsköpfe aufgrund ihrer regelmäßigen Wartung erhöht.

- 7 -

## Legende

| | |
|---|---|
| 1 | Arbeitskopf |
| 2 | Düsenkopf |
| 3 | Stromzufuhr |
| 4 | Wasserzufuhr |
| 5 | Luftzufuhr |
| 6 | elektronische Steuerung |
| 7 | Arm |
| 8 | Rahmen |
| 9 | Wasserventil |
| 1o | Reinigungsbehälter |
| 11 | Luftventil |
| 12 | Reinigungsventil |
| 13 | Ölventil |
| 14 | Ölbehälter |

- 1 -

Patentansprüche:

1. Vorrichtung zum Reinigen und Warten der Arbeitsköpfe ( 1 ) eines Flaschenbehandlungsrundläufers
dadurch gekennzeichnet,

daß an einem parallel zur Rundläufer-Maschine angeordneten Arm ( 7 ) auf einem Rahmen ( 8 ) ein Düsenkopf ( 2 ) gegenüber den Arbeitsköpfen ( 1 )
angeordnet ist, aus dem durch die vom Wasserventil
( 9 ) gesteuerte Wasserzufuhr ( 4 ) Wasser, durch
die von dem Luftventil ( 11 ) gesteuerte Luftzufuhr
( 5 ) Preßluft, aus dem von Reinigungsventil ( 12 )
gesteuerten Reinigungsbehälter ( 1o ) Reiniger und
aus dem vom Ölventil ( 13 ) gesteuerten Ölbehälter
( 14 ) Öl auf die Arbeitsköpfe ( 1 ) des Rundläufers
gesprüht werden können.

2. Vorrichtung nach Anspruch 1,
dadurch gekennzeichnet,
daß das Wasserventil ( 9 ), das Luftventil ( 11 ),
das Reinigungsventil ( 12 ) und das Ölventil ( 13 )
von einer elektronischen Steuerung ( 6 ) geschaltet
werden.

3. Vorrichtung nach Ansprüchen 1 und 2,

dadurch gekennzeichnet,

daß zuerst Wasser und ein Wasser-Reiniger-Gemisch und danach Preßluft und ein Preßluft-Ölgemisch zu einstellbaren Zeiten auf die Arbeitsköpfe ( 1 ) gesprüht werden.

4. Vorrichtung nach mindestens einem der Ansprüche 1 bis 3,

dadurch gekennzeichnet,

daß der Schalter für die elektronische Steuerung ( 6 ) an dem Arm ( 7 ) oder auf dem Rahmen ( 8 )

angeordnet ist.